# EUROPÄISCHE PATENTSCHRIFT

(11) **EP 2 048 426 B1**
(45) Veröffentlichungstag und Bekanntmachung des Hinweises auf die Patenterteilung: **27.07.2011**
(21) Anmeldenummer: 08016506.1
(22) Anmeldetag: 19.09.2008
(51) Int. Cl.: F16L 47/02, F16L 47/34, F16L 41/06, F16L 41/08

(54) **Anbohrarmatur**
Tapping fitting
Appareil de perçage

(30) Priorität: 22.09.2007 DE 102007045431
(43) Veröffentlichungstag der Anmeldung: 15.04.2009
(73) Patentinhaber: egeplast Werner Strumann GmbH & Co. KG, 48268 Greven (DE)
(72) Erfinder: Stranz, Michael, Dr., 48432 Rheine (DE); Späth, Thorsten, Dr., 48282 Emsdetten (DE)
(74) Vertreter: Fritz, Edmund Lothar

(56) Entgegenhaltungen:
- GB-A- 2 401 158
- JP-A- 8 121 668
- US-A- 3 633 599
- US-A- 5 577 776

## Beschreibung

Die vorliegende Erfindung betrifft eine Anbohrarmatur umfassend ein von außen auf eine anzubohrende Rohrleitung aufzusetzendes Sattelstück, einen Anbohrstutzen, einen in dem Anbohrstutzen aufgenommenen innerhalb dessen in Achsrichtung von außen in Richtung auf die Rohrachse beweglich angeordneten Bohrer, sowie einen Abzweigstutzen für eine anzuschließende Zweigleitung, wobei Mittel vorgesehen sind, um mindestens einen im Bereich der Schnittfläche einer angebohrten mehrschichtigen Rohrleitung durch das Anbohren entstehenden Spalt zwischen zwei aneinander grenzenden Schichten der mehrschichtigen Rohrleitung zu verschließen.

In der EP 0 845 630 A2 ist eine typische herkömmliche Anbohrarmatur beschrieben. Diese ermöglicht es, eine unter Druck stehende Hauptleitung anzubohren und an den Abzweigstutzen eine von der Hauptleitung abzweigende Zweigleitung anzuschließen und mit dem in der Hauptleitung strömenden Medium zu versorgen. Das Sattelstück wird dazu außen auf die Hauptleitung aufgesetzt und mit dieser druckdicht verbunden. Dann wird mittels des Bohrers die Hauptleitung angebohrt und der Bohrer wird wieder zurückgezogen. An den Abzweigstutzen kann danach die Zweigleitung montiert werden. Nach Entfernen des Bohrers wird der Anbohrstutzen durch geeignete Mittel, zum Beispiel über eine Kappe verschlossen. Da derartige Anbohrarmaturen dazu dienen, unter Druck stehende Leitungen anzubohren und Zweigleitungen anzuschließen, ohne das Medium aus der Hauptleitung abzulassen, müssen alle funktionswesentlichen Elemente der Anbohrarmatur so ausgebildet sein, dass eine absolute Dichtheit während sämtlicher Arbeitsschritte gewährleitstet ist. Außerdem muss die dauerhafte Dichtigkeit im Bereich der Bohrung durch die Wandung der Hauptleitung sicher gestellt werden, da dort das Medium über eine entsprechende Öffnung im Sattelstück in das Innere der Anbohrarmatur eintritt, um von dort über den Abzweigstutzen in die Zweigleitung zu strömen.

Die bekannten Anbohrarmaturen stellen die Dichtigkeit beim Anbohren einfacher Rohrleitungen mit einschichtiger Wandung sicher. Wird jedoch eine mehrschichtige Versorgungsleitung quer zu ihrer Achse angebohrt, liegen im Bereich der dann entstehenden Schnittfläche die Grenzflächen der aneinander grenzenden durchtrennten Schichten der Rohrwandung frei, so dass das Medium dort eintreten und zwischen zwei benachbarte Schichten der Rohrwandung gelangen könnte. Bei den aus dem Stand der Technik bekannten Anbohrarmaturen sind keine Vorkehrungen getroffen, die dadurch verursachte Undichtigkeiten im Bereich der Abzweigung verhindern.

In der EP 0 679 831 B1 wird ein Verbindungsformteil für Abzweiganschlüsse bei einer Rohrleitung beschrieben, bei dem ein Sattelstück auf die Hauptrohrleitung aufgesetzt wird und das Verbindungsformteil ein Schweißelement aufweist, umfassend eine Heizwicklung an der Innenkontur des Sattelstücks. Durch Erwärmung können dadurch die Kontaktflächen im Bereich des Sattelstücks sowie am Außenumfang der Rohrleitung teilweise aufgeschmolzen werden, wodurch eine stoffschlüssige Verbindung herstellbar ist. Die Rohrwandung der Hauptleitung ist jedoch auch hier lediglich einschichtig, so dass eine spezifische Eignung des Verbindungsformteils für Abzweiganschlüsse an mehrschichtigen Rohrleitungen nicht gegeben ist.

In der GB 2 401 158 A ist eine Anbohrarmatur der eingangs genannten Gattung sowie ein Verfahren zum Anschließen einer Zweigleitung an eine Rohrleitung über eine Anbohrarmatur beschrieben, wobei es sich bei der Rohrleitung um eine solche handelt, in die ein "liner" eingezogen wurde. Die ursprüngliche Rohrleitung ohne den liner ist jedoch einschichtig. Liner werden in vorhandene Altrohrleitungen eingezogen, um diese zu sanieren. Bei diesem bekannten Verfahren wird zunächst nur eine Öffnung in die äußere Rohrleitung gebohrt, während der innenliegende liner noch intakt bleibt. Dann wird durch eine Einschraubdrehbewegung ein Schneidwerkzeug der Anbohrarmatur axial weiter vorgeschoben, um den liner anzubohren. Im äußeren Bereich der Anbohrarmatur befindet sich eine konische Verdickung, die durch die Bohrung im liner vorgeschoben wird. Das Bohrloch im liner wird dadurch aufgeweitet und dessen äußere Bereiche werden umgelegt. Wird das verdickte Werkzeug dann wieder zurückgezogen wird der liner mitgenommen, an die Innenseite eines äußeren Stutzens der Anbohrarmatur angelegt und zwischen diesem Stutzen und der Verdickung verklemmt, um so im Bereich der Bohrung abzudichten. Es liegt auf der Hand, dass diese Vorgehensweise auf Rohre mit linern beschränkt ist, da der liner unabhängig von der eigentlichen äußeren Rohrwandung beweglich sein muss. Bei einem mehrschichtigen Rohr, bei dem die Schichten einen festen Verbund bilden (stoffschlüssige Verbindung) ist dieses Verfahren daher nicht anwendbar.

Zudem wird bei dem aus der GB 2 401 158 A bekannten Verfahren so vorgegangen, dass zunächst ein größeres Loch in die Außenleitung gebohrt wird und erst danach ein kleineres Loch in das aus dem liner gebildete Innenrohr gebohrt wird. Dies setzt zwei Bohrvorgänge voraus. Bei mehrschichtigen Rohren mit zwei aneinandergrenzenden Schichten mit geringerer Wandstärke ist ein solches schrittweises selektives Anbohren einzelner Schichten kaum praktikabel.

In der DE 199 33 977 C2 ist ein Verfahren zum Anbinden eines Anschlussrohrs an ein mittels eines Reliningrohrs aus Kunststoffmaterial saniertes Hauptrohr beschrieben, bei dem man mittels einer Verfahreinrichtung in das sanierte Rohr fährt und man dann mittels einer Heizeinrichtung von innen her den liner aufschmilzt, um so eine Öffnung zu schaffen. Der liner wird dann mittels eines Arbeitskopfs aufgeweitet und in die Öffnung zum Anschlussrohr gedrückt, dann über Finger an dem Arbeitskopf an die Innenseite der Wandung des Anschlussrohrs angedrückt, um im Bereich der Abzweigung abzudichten. Dieses Verfahren erfordert zum einen eine entsprechende in die Rohrleitung einfahrbare Vorrichtung. Außerdem ist auch dieses Verfahren nur für Rohrleitungen geeignet, in die ein separater verformbarer liner eingezogen wurde, nicht aber für mehrschichtige Verbundrohre, die bereits als Mehrschichtrohre hergestellt werden und bei denen folglich die Schichten stoffschlüssig verbunden und für den Anschlussvorgang nicht voneinander trennbar sind.

Bei dem aus der DE 199 33 977 C2 bekannten Verfahren können sich Heizeinrichtungen in den Fingern des Arbeitskopfes befinden. Diese Heizeinrichtungen können das Kunststoffmaterial des liners punktuell erwärmen und dadurch mit dem Außenrohr verbinden. Es erfolgt also eine punktförmige Verschweißung. Allerdings ist dies nur dadurch möglich, dass zuvor durch den Arbeitskopf ein halsartiger Bereich des Reliningrohrs in das Innere des Abzweigstutzens gedrückt wird. Dies wäre bei einem mehrschichtigen Kunststoffrohr mit stoffschlüssig verbundenen Schichten nicht möglich, da sich anders als bei einem liner eine oder mehrere innere Schichten nicht aus dem Außenrohr herausziehen ließen. Zudem muss über die Verfahreinrichtung, die im Inneren der Hauptleitung verfährt, zunächst eine Stelle, an der der Abzweigstutzen abgeht, lokalisiert werden, wozu eine entsprechende Einrichtung an der Verfahreinrichtung notwendig ist. Außerdem ist dieses bekannte Verfahren auf Fälle beschränkt, bei denen von der Innenseite her ein Anschluss zu einer Abzweigleitung hergestellt werden kann, wie insbesondere bei sanierten Abwasserleitungen. Bei Gas oder Wasserleitungen, die ein unter Druck stehendes Medium führen, kommt das Verfahren kaum in Betracht. Es wird keine Anbohrarmatur im Sinne der vorliegenden Erfindung verwendet, unter der eine Armatur verstanden wird, die über ein Sattelstück von außen auf die Hauptrohrleitung aufgesetzt wird.

Die US 5,577,776 A beschreibt ein weiteres Verfahren für Rohre, die innenseitig mit einer liner-Schicht ausgekleidet sind. Hier wird eine Anbohrarmatur verwendet, die endseitig eine Dichtvorrichtung mit beweglichen Fingern aufweist. Über einen axial vorschiebbaren inneren Stutzen können diese Finger radial nach außen bewegt werden, um dann den liner an die Innenwandung des Rohrs anzudrücken und so im Bereich einer Abzweigung abzudichten.

Hier setzt die vorliegende Erfindung ein. Die Aufgabe der vorliegenden Erfindung besteht darin, eine Anbohrarmatur der eingangs genannten Gattung zur Verfügung zu stellen, die einen sicheren Anschluss einer Zweigleitung an eine mehrschichtige möglicherweise unter Druck stehende Hauptleitung mit hoher Dichtigkeit zulässt, wenn die Hauptleitung aus einem Verbundrohr mit wenigstens zwei stoffschlüssig miteinander verbunden Schichten besteht.

Die Lösung dieser Aufgabe liefert eine Anbohrarmatur der eingangs genannten Gattung mit den kennzeichnenden Merkmalen des Hauptanspruchs.

Erfindungsgemäß ist vorgesehen, dass die Mittel zum Verschließen des Spalts im Bereich des Bohrers der Anbohrarmatur angeordnet sind. Dies schafft die Möglichkeit, die mehrschichtige Rohrleitung anzubohren, so dass gleichzeitig mehrere Schichten der Rohrleitung (in der Regel alle Schichten) durchbohrt werden und die bei diesem Anbohrvorgang entstandene Schnittfläche, die ja eine ringförmige Fläche etwa senkrecht zur Rohrachse durch die Rohrwandung ist, über den Bohrer zu verschließen. Das Anbohren und Verschließen kann damit quasi in einer raschen Abfolge von Arbeitsgängen erfolgen, die sich unmittelbar aneinander anschließen. Der Bohrer kann beispielsweise die Rohrwandung anbohren und in seiner Position verbleibend danach die Schnittfläche bearbeiten. Beim Anbohren einer mehrschichtigen Rohrleitung, bei der die Schichten stoffschlüssig miteinander verbunden sind und somit die relative Lage der Schichten zueinander unveränderlich ist, (anders als bei der Verwendung eines liners gemäß dem zuvor zitierten Stand der Technik), entsteht durch das Anbohren in der Schnittfläche ein Spalt jeweils zwischen zwei aneinander grenzenden Schichten der mehrschichtigen Rohrleitung, welcher erfindungsgemäß unmittelbar nach dem Bohrvorgang in nur einem weiteren Arbeitsschritt und somit rasch verschlossen werden kann. Es werden daher wesentlich weniger Arbeitsgänge notwendig als bei bekannten Verfahren und die für die Erstellung der Bohrung und das Verschließen des Spalts verwendete Vorrichtung kann von außen arbeiten. Die verwendete Vorrichtung ist ebenfalls vergleichsweise einfach aufgebaut und universeller verwendbar, im Vergleich zu Vorrichtungen, die in die Rohrleitung hinein gefahren werden bzw. solchen, die nur für eine sanierte Leitung mit eingezogenem liner einsetzbar sind. Es kann bei dem erfindungsgemäßen Verfahren auch eine unter Druck stehende Gas- oder Wasserleitung angebohrt werden. Die erfindungsgemäße Anbohrarmatur und das Verfahren zum Anschluss einer Zweigleitung an eine Hauptleitung gemäß der vorliegenden Erfindung sind aber grundsätzlich sowohl für unter Druck stehende Rohrleitungen als auch für Rohrleitungen geeignet, die für den Transport eines nicht unter Druck stehenden Mediums (Gas, Flüssigkeit, dickflüssiges Medium) vorgesehen sind.

Vorzugsweise werden solche Mittel zum Verschließen des mindestens einen durch das Anbohren entstehenden Spalts verwendet, die geeignet sind, den Spalt zu Verschweißen.

Vorzugsweise umfasst die Rohrleitung mindestens eine Schicht aus Kunststoff und die Mittel zum Verschließen des mindestens einen durch das Anbohren entstehenden Spalts sollten geeignet sein, den Kunststoff zu erwärmen und mindestens teilweise Aufzuschmelzen, so dass geschmolzener Kunststoff den Spalt abdichtet.

Man kann bei dem Anschluss einer Zweigleitung an eine unter Druck stehende Hauptleitung also erfindungsgemäß so vorgehen, dass man den Sattelstutzen der Anbohrarmatur auf die anzubohrende Hauptleitung aufsetzt und mit dieser verbindet. Beispielsweise geschieht dies durch stoffschlüssiges Verschweißen der Kontaktfläche des Sattelstutzens mit der äußeren Umfangsfläche der Rohrleitung. Dann wird mittels des Bohrers die Rohrleitung an der vorgesehenen Stelle angebohrt und die Zweigleitung wird im Bereich des Abzweigstutzens montiert. Bevor man nun den Bohrer wieder zurückzieht, erwärmt man den Kunststoff im Bereich des genannten Spalts, so dass dieser aufschmilzt und dadurch der Spalt durch die Schmelze abgedeckt wird und nach dem Erkalten des Kunststoffs damit druckdicht verschlossen ist. Das in der Rohrleitung strömende Medium kann dann nicht mehr im Bereich der Anbohrstelle zwischen die Schichten der mehrschichtigen Rohrleitung gelangen. Nach Zurückziehen des Bohrers, Verschließen des Anbohrstutzens durch geeignete Mittel und Freigabe der Zweigleitung kann dann das Medium aus der Hauptrohrleitung über den Abzweigstutzen der Anbohrarmatur in die Zweigleitung strömen.

Vorzugsweise ist gemäß einer Weiterbildung der Erfindung mindestens ein Heizelement vorgesehen, um den Kunststoff in dem zu verschließenden angebohrten Bereich der Rohrleitung zu erwärmen. Dieses Heizelement ist bevorzugt im oder am Bohrer angeordnet. Beispielsweise kann man Heizwendel, Heizkanäle oder dergleichen im Bohrer an geeigneter Stelle anbringen, so dass nach dem Anbohren die Erwärmung mittels des in Bohrstellung verbleibenden Bohrers erfolgen kann. Dies reduziert die Anzahl der notwendigen Arbeitsschritte und verkürzt das Verfahren.

Im Falle von Heizwendeln erfolgt die Erwärmung elektrisch, wobei es in diesem Falle vorteilhaft ist, wenn der Bohrer selbst, der die Heizwendel aufnimmt, aus einem elektrisch nicht oder nur geringfügig leitenden Werkstoff besteht. Bei Verwendung von Heizkanälen zur Erwärmung können diese bevorzugt ein flüssiges Heizmedium aufnehmen, welches sich auf eine zum Aufschmelzen des Kunststoffs der Rohrleitung ausreichende Temperatur erwärmen lässt. Beispielsweise kommt hier ein geeignetes Öl oder dergleichen als Heizmedium in Betracht.

Die vorliegende Erfindung betrifft weiterhin ein Verfahren zum Anschließen einer Zweigleitung an eine gegebenenfalls unter Druck stehende Rohrleitung mittels einer Anbohrarmatur, bei dem zunächst die Anbohrarmatur mit einem Sattelstück auf die Außenseite der Rohrleitung aufgesetzt wird, dann das Sattelstück mit der äußeren Umfangsfläche der Rohrleitung verbunden wird und die Rohrwandung der Rohrleitung mittels eines Bohrers angebohrt wird, welches dadurch gekennzeichnet ist, dass eine mehrschichtige Rohrleitung angebohrt wird, bei der wenigstens zwei bei der Herstellung der Rohrleitung stoffschlüssig miteinander verbundene Schichten der Rohrwandung mit einer Bohrung einheitlichen Durchmessers versehen werden und nach dem Bohren mindestens ein durch das Anbohren entstehender Spalt zwischen zwei aneinander grenzenden Schichten der mehrschichtigen Rohrleitung im Bereich der Stirnfläche der Bohrung durch die Rohrwand mittels Erwärmung durch in der Anbohrarmatur vorgesehene Mittel verschlossen wird.

Die vorliegende Erfindung ist insbesondere aber keineswegs ausschließlich anwendbar für zwei- oder mehrschichtige Rohrleitungen aus Kunststoff oder Verbundleitungen aus Kunststoff und anderen, insbesondere metallischen Werkstoffen.

Die vorliegende Erfindung kommt in erster Linie in Betracht für zwei-, drei- oder mehrschichtige Rohrleitungen mit einer oder mehreren Schichten aus thermoplastischen Kunststoffen. Derartige Kunststoffrohrleitungen lassen sich beispielsweise durch Extrusion herstellen. Das erfindungsgemäße Anbohren zur Herstellung eines Abzweigs kann nach der Verlegung oder zu einem beliebigen späteren Zeitpunkt erfolgen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Darstellung einer Anbohrarmatur gemäß einer möglichen Ausführungsvariante der Erfindung, wobei die anzubohrende Rohrleitung im Querschnitt dargestellt ist vor dem Anbohren;
Figur 2 eine schematisch vereinfachte Teildarstellung einer Rohrleitung nach dem Anbohren im Längsschnitt.

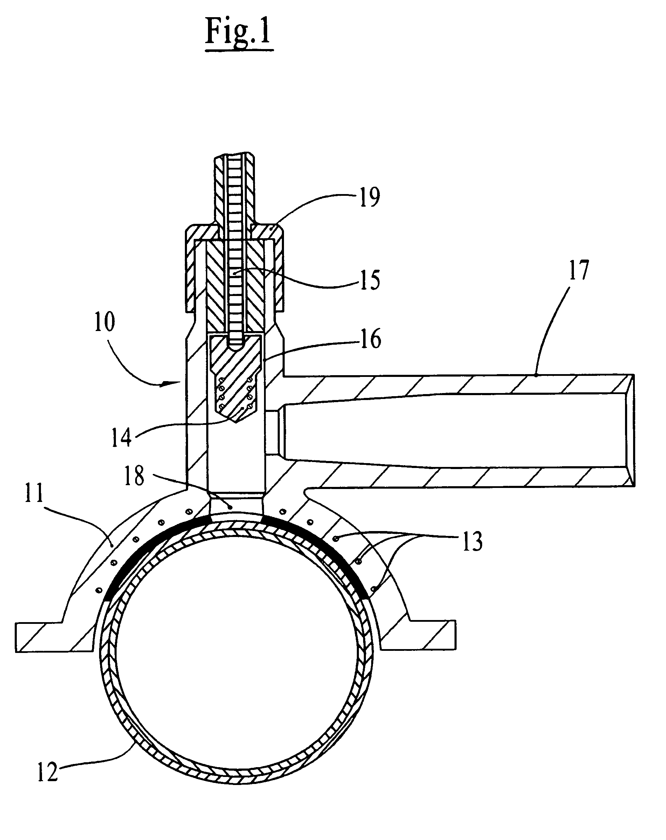

Zunächst wird auf die Figur 1 Bezug genommen. Diese zeigt eine erfindungsgemäße Anbohrarmatur im Schnitt, wobei die Darstellung stark schematisch vereinfacht ist und nur die im Zusammenhang mit der vorliegenden Erfindung wesentlichen Bauteile dargestellt sind. Die Anbohrarmatur umfasst ein Gehäuse 10 mit einem Anbohrstutzen (siehe Bohrung 16), sowie mit einem Sattelstutzen 11, der auf die anzubohrende Rohrleitung (Hauptleitung) 12 aufgesetzt und mit dieser an deren äußeren Umfang durch Verschweißen verbunden wird. Man erkennt, dass dazu in dem Sattelstutzen 11 Heizwendel 13 angeordnet sind, die einen Teilbereich der äußeren Umfangsfläche des aus Kunststoff bestehenden Rohrs aufschmelzen, wodurch der auf die Rohrleitung 12 aufgesetzte Sattelstutzen 11 mit dieser Rohrleitung 12 verschweißt wird.

In dem Gehäuse 10 der Anbohrarmatur befindet sich ein Bohrer 14, der an einer Spindel 15 oder dergleichen in der Bohrung 16 des Anbohrstutzens des Gehäuses axial verschieblich gehalten ist. Mittels dieses Bohrers 14 wird dann die unter Druck stehende Rohrleitung angebohrt. In Figur 1 ist der Zustand vor dem Anbohren wiedergegeben.

Die Anbohrarmatur weist weiterhin einen seitlichen Abzweigstutzen 17 auf, dessen Achse sich rechtwinklig zur Vorschubrichtung des Bohrers 14 erstreckt. An diesen Abzweigstutzen 17 ist eine hier nicht dargestellte Zweigleitung anschließbar, die beispielsweise zu einem Hausanschluss führt, um einen Haushalt mit dem in der Rohrleitung 12 strömenden Fluid, beispielsweise Gas oder Wasser, zu versorgen. Das Innere dieser Zweigleitung steht in Strömungsverbindung mit der Bohrung 16 im Inneren des Gehäuses. Letztere bildet einen Strömungskanal, der durch eine Bohrung 18 im Sattelstutzen bei angebohrter Rohrleitung die Strömungsverbindung zum Inneren der Rohrleitung 12 herstellt.

Die Anbohrarmatur weist weiterhin eine Kappe 19 auf, die geeignet ist, die Anbohrarmatur oberseitig zu verschließen und beispielsweise auf das Gehäuse 10 aufschraubbar ist. Dies geschieht insbesondere nach dem Bohrvorgang und nach Montage des Anschlusses der Zweigleitung, da dann der Bohrer 14 aus dem Gehäuse 10 entfernt wird. Natürlich sind darüber hinaus diverse Dichtungen vorgesehen, die hier nicht dargestellt sind, um zu gewährleisten, dass die Druckdichtigkeit der gesamten Anordnung während des Anschlussvorgangs gegeben ist.

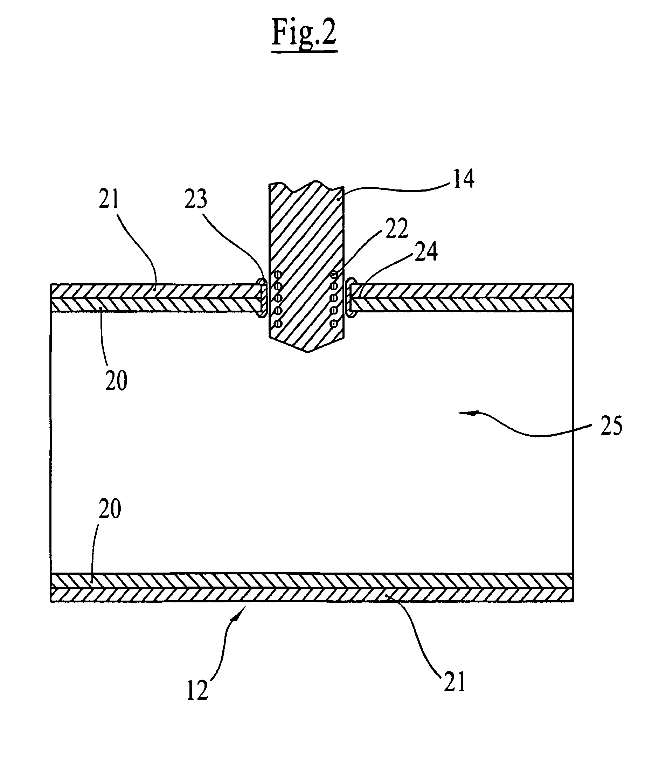

Es wird beim Anschluss einer Zweigleitung so vorgegangen. Zunächst wird in der bereits zuvor geschilderten Weise die Anbohrarmatur mit dem Sattelstutzen 11 auf die Rohrleitung 12 aufgesetzt und mit dieser stoffschlüssig verschweißt. An den Abzweigstutzen 17 wird die Zweigleitung für den Hausanschluss angeschlossen. Dann wird der Bohrer durch axialen Vorschub innerhalb des Gehäuses in Richtung auf die Wandung der Rohrleitung 12 bewegt und diese wird angebohrt. Nun handelt es sich bei der angebohrten Rohrleitung 12 wie aus Figur 1 und insbesondere aus der Darstellung gemäß Figur 2 erkennbar ist um eine mehrschichtige Rohrleitung. Im vorliegenden Ausführungsbeispiel ist diese zweischichtig mit einer Innenschicht 20 und einer Außenschicht 21. Unter einer mehrschichtigen Rohrleitung im Sinne der Erfindung wird dabei eine solche verstanden, bei der die Schichten herstellungsbedingt einen Verbund bilden, das heißt, dass die Schichten bei der Herstellung eines Rohrs stoffschlüssig miteinander verbunden werden.

Figur 2 zeigt beispielhaft eine zweischichtige Rohrleitung 12 im Längsschnitt während des Anbohrvorgangs. Man sieht, dass der Bohrer 14 beide Schichten 20, 21 der Rohrleitung 12 durchbohrt hat. Durch das durchbohren beider Schichten 20, 21 ergibt sich eine ringförmige Schnittfläche ringsum das Bohrloch. Die Vorschubachse des Bohrers 14 verläuft in der Regel etwa senkrecht zur Achse der Rohrleitung, das heißt also radial zu dieser. Da das Rohr zweischichtig ist, entsteht in der Schnittfläche ein ringförmig umlaufender Spalt, dort wo die beiden Schichten aneinander grenzen. Erfindungsgemäß ist nun vorgesehen, dass in einem Bereich des Bohrers 14, beispielsweise in einem vorderen Bereich wie in der Zeichnung dargestellt, Heizelemente 22 angeordnet sind, zum Beispiel Heizwendel, so dass der Bohrer in diesem Bereich erwärmt werden kann. Diese Erwärmung kann demnach stattfinden, nachdem der Bohrer 14 die beiden Schichten 20, 21 der Rohrleitung 12 durchbohrt hat und bevor der Bohrer wieder zurückgezogen wird. Verbleibt der Bohrer 14 eine Zeit lang in der in Figur 2 dargestellten Position und wird über geeignete Heizwendel oder Heizkanäle 22 erwärmt, dann kann der Kunststoff im Bereich der Schnittfläche aufschmelzen und eine Abdeckung 23 in Form einer Wulst oder dergleichen bilden, mittels derer dann der sonst im Grenzbereich 24 der beiden aneinander grenzenden Schichten 20, 21 entstehende Spalt verschlossen wird. Dadurch wird verhindert, dass das unter Druck stehende Medium aus dem Inneren 25 über einen solchen Spalt zwischen die beiden Schichten 20, 21 gelangt und somit eine Undichtigkeit in der Rohrleitung im Bereich des Anschlusses zur Zweigleitung hervorruft.

### Bezugszeichenliste

- 10: Gehäuse
- 11: Sattelstutzen
- 12: Rohrleitung
- 13: Heizwendel
- 14: Bohrer
- 15: Spindel
- 16: Bohrung
- 17: Abzweigstutzen
- 18: Bohrung
- 19: Kappe
- 20: Innenschicht
- 21: Außenschicht
- 22: Heizwendel bzw. Heizkanäle
- 23: Abdeckung, Wulst
- 24: Grenzbereich
- 25: Inneres der Rohrleitung

## Patentansprüche

1. Anbohrarmatur umfassend ein von außen auf eine anzubohrende Rohrleitung aufzusetzendes Sattelstück, einen Anbohrstutzen, einen in dem Anbohrstutzen aufgenommenen innerhalb dessen in Achsrichtung von außen in Richtung auf die Rohrachse beweglich angeordneten Bohrer, sowie einen Abzweigstutzen für eine anzuschließende Zweigleitung,
wobei Mittel (22) vorgesehen sind, um mindestens einen im Bereich der Schnittfläche einer angebohrten mehrschichtigen Rohrleitung (12) durch das Anbohren entstehenden Spalt zwischen zwei aneinander grenzenden Schichten (20, 21) der mehrschichtigen Rohrleitung zu verschließen,
**dadurch gekennzeichnet, dass** die Mittel (22) zum Verschließen des Spalts im Bereich des Bohrers (14) der Anbohrarmatur angeordnet sind.

2. Anbohrarmatur nach Anspruch 1, **dadurch gekennzeichnet, dass** die Mittel (22) zum Verschließen des mindestens einen durch das Anbohren entstehenden Spalts geeignet sind, um den Spalt zu Verschweißen.

3. Anbohrarmatur nach Anspruch 2, **dadurch gekennzeichnet, dass** die Rohrleitung (12) mindestens eine Schicht aus Kunststoff umfasst und die Mittel (22) zum Verschließen des mindestens einen durch das Anbohren entstehenden Spalts im Bereich der Schnittfläche der Bohrung geeignet sind, den Kunststoff zu erwärmen und mindestens teilweise Aufzuschmelzen, so dass geschmolzener Kunststoff den Spalt in der Schnittfläche der Bohrung abdichtet.

4. Anbohrarmatur nach Anspruch 3, **dadurch gekennzeichnet, dass** die Mittel zum Verschließen des mindestens einen durch das Anbohren entstehenden Spalts wenigstens ein Heizelement oder einen Heizkanal (22) zum Erwärmen und Aufschmelzen des Kunststoffs im Bereich des Spalts in der Schnittfläche der Bohrung umfassen.

5. Anbohrarmatur nach einem der Ansprüche 1 bis 4, **dadurch gekennzeichnet, dass** mindestens ein Heizelement oder ein Heizkanal (22) im Bereich des Bohrers (14) angeordnet ist, um den Kunststoff der mehrschichtigen Rohrleitung im Bereich des Spalts in der Schnittfläche der Bohrung zu Erwärmen und Aufzuschmelzen.

6. Anbohrarmatur nach einem der Ansprüche 4 oder 5, **dadurch gekennzeichnet, dass** mindestens ein Heizkanal (22) im Bohrer (14) der Anbohrarmatur ein vorzugsweise flüssiges Heizmedium aufnimmt, welches sich auf eine zum Aufschmelzen des Kunststoffs der Rohrleitung ausreichende Temperatur erwärmen lässt.

7. Anbohrarmatur nach einem der Ansprüche 1 bis 4, **dadurch gekennzeichnet, dass** der Bohrer (14) so ausgebildet ist, dass beim Bohrvorgang im Bereich der Schnittfläche der Bohrung durch die Rohrwand einer mehrschichtigen mindestens teilweise aus Kunststoff bestehenden Rohrleitung (12) eine ausreichende Erwärmung auftritt, um den Kunststoff im Bereich der Schnittfläche mindestens teilweise aufzuschmelzen und einen durch das Anbohren entstehenden Spalt in der Schnittfläche der Bohrung zwischen aneinander grenzenden Schichten zu verschließen.

8. Verfahren zum Anschließen einer Zweigleitung an eine gegebenenfalls unter Druck stehende Rohrleitung mittels einer Anbohrarmatur, bei dem zunächst die Anbohrarmatur mit einem Sattelstück auf die Außenseite der Rohrleitung aufgesetzt wird, dann das Sattelstück mit der äußeren Umfangsfläche der Rohrleitung verbunden wird und die Rohrwandung der Rohrleitung mittels eines Bohrers angebohrt wird,
**dadurch gekennzeichnet, dass** eine mehrschichtige Rohrleitung (12) angebohrt wird, bei der wenigstens zwei bei der Herstellung der Rohrleitung stoffschlüssig miteinander verbundene Schichten der Rohrwandung mit einer Bohrung einheitlichen Durchmessers versehen werden und nach dem Bohren mindestens ein durch das Anbohren entstehender Spalt zwischen zwei aneinander grenzenden Schichten (20, 21) der mehrschichtigen Rohrleitung im Bereich der Stirnfläche der Bohrung durch die Rohrwand mittels Erwärmung durch in der Anbohrarmatur vorgesehene Mittel (22) verschlossen wird.

9. Verfahren nach Anspruch 8, **gekennzeichnet durch** die Verwendung einer Anbohrarmatur mit den Merkmalen eines der Ansprüche 1 bis 7.

## Claims

1. Spot-drilling device comprising a saddle section to be placed externally on a pipeline to be spot-drilled, a spot drill connection, a drill arranged in the drill connection which can be moved therein in the axial direction from outside in the direction of the pipe axis, as well as a branch connection for a connectable branch,
whereby means (22) are provided for closing a gap occurring through the spot drilling between adjoining layers (20, 21) of the multiple-layer pipe in the area of the interface of a spot-drilled multiple layer pipe (12)
**characterised in that** the means (22) for closing the gap are arranged in the the area of the drill (14) of spot-drilling device.

2. Spot-drilling device in accordance with claim 1 **characterised in that** the means (22) for closing the at least one gap caused by the spot drilling are capable of welding the gap.

3. Spot drilling device in accordance with claim 2 **characterised in that** the pipeline (12) comprises at least one plastic layer and the means (22) for closing the at least one gap caused by the spot drilling in the area of the interface of the drilled hole are capable of heating and at least partially melting the plastic so that melted plastic seals the interface of the drilled hole.

4. Spot-drilling device in accordance with claim 3 **characterised in that** the means for closing the at least one gap caused by the spot drilling comprise at least one heating element or one heating channel (22) for warming and melting the plastic in the area of the gap in the interface of the drilled hole.

5. Spot-drilling device in accordance with any one of claims 1 to 4 **characterised in that** the at least one heating element or one heating channel (22) is arranged in the area of the drill (14) in order to heat and melt the plastic of multiple-layer pipeline in the area of the gap in the interface of the drilled hole.

6. Spot-drilling device in accordance with claim 4 or 5 **characterised in that** at least one heating channel (22) in the drill (14) of the spot-drilling device takes up a preferably fluid heating medium which can be heated to a temperature sufficient for melting the plastic of the pipeline.

7. Spot drilling device in accordance with any one of claims 1 to 4 **characterised in that** the drill (14) is designed in such a way that during the drilling process in the area of the interface of the drilled hole though the pipe wall of a multiple-layer pipeline (12) consisting at least partially of plastic, sufficient heating occurs in order to at least partially melt the plastic in the area of the interface and to close the gap produced between adjoining layer by the drilling in the interface of the drilled hole.

8. Method of connecting a branch to a pipeline, which may be pressurised, by means of a spot-drilling device in which the spot-drilling device is initially mounted on the outside of the pipeline with a saddle section, the saddle section is then connected to the outer circumferential area of the pipeline and the pipe wall of the pipeline is spot-drilled by means of a drill
**characterised in that** a multiple-layer pipeline (12) is spot-drilled in which two layers of the pipe wall firmly bonded to each other during the manufacture of the pipeline are provided with a drilled hole of uniform diameter and after drilling at least one gap produced between adjoining layers (20, 21) of the multiple layer pipeline in face area of the drilled hole through the pipe wall is closed by means of heating through means (22) provided in the spot-drilling device.

9. Method in accordance with claim 8 **characterised by** the use of a spot-drilling device with the features of claims 1 to 7.

## Revendications

1. Dispositif de perçage comprenant une pièce d'accouplement à disposer sur la conduite à percer, un raccord de perçage, un foret accueilli dans le raccord de perçage et disposé de façon à pouvoir se déplacer dans celui-ci, dans le sens de l'axe, de l'extérieur vers l'axe de la conduite, ainsi qu'un raccord de branchement pour une conduite dérivée,
dans lequel sont prévus des moyens (22) permettant de boucher une fente entre deux couches adjacentes (20, 21) d'une conduite à plusieurs couches (12), apparaissant avec le perçage dans la région de la surface de coupe de la conduite,
**caractérisé en ce que** les moyens (22) pour le colmatage de la fente sont disposés dans la région du foret (14) du dispositif de perçage.

2. Dispositif de perçage selon la revendication 1, **caractérisé en ce que** les moyens (22) pour la fermeture de l'au moins une fente provoquée par le perçage sont adaptés pour souder la fente.

3. Dispositif de perçage selon la revendication 2, **caractérisé en ce que** la conduite (12) comprend au moins une couche de matière plastique, et les moyens (22) pour le colmatage de l'au moins une fente provoquée par le perçage sont, dans la région de la surface de coupe du perçage, adaptés pour chauffer la matière plastique et la faire fondre au moins partiellement, de manière à ce que la matière plastique scelle la fente dans la surface de coupe du perçage.

4. Dispositif de perçage selon la revendication 3, **caractérisé en ce que** les moyens pour le colmatage de l'au moins une fente provoquée par le perçage comprennent au moins un élément chauffant ou un canal chauffant (22) pour chauffer et faire fondre la matière plastique dans la région de la fente dans la surface de coupe du perçage.

5. Dispositif de perçage selon l'une des revendications 1 à 4, **caractérisé en ce que** l'au moins un élément chauffant ou canal chauffant (22) est disposé dans la région du foret (14), pour pouvoir chauffer et faire fondre la matière plastique de la conduite à plusieurs couches, dans la région de la fente dans la surface de coupe du perçage.

6. Dispositif de perçage selon l'une des revendications 4 ou 5, **caractérisé en ce que** l'au moins un canal chauffant (22) dans le foret (14) du dispositif de perçage reçoit un milieu de préférence liquide, apte à être chauffé à une température suffisante pour faire fondre la matière plastique de la conduite.

7. Dispositif selon l'une des revendications 1 à 4, **caractérisé en ce que** le foret (14) est conçu de manière à ce que, pendant l'opération de perçage, dans la région de la surface de coupe du perçage dans la paroi de conduite, la conduite (12) à plusieurs couches, constituée au moins partiellement d'une matière plastique, puisse être chauffée suffisamment pour faire fondre au moins partiellement la matière plastique dans la région de la surface de coupe, et ainsi colmater une fente provoquée par le perçage, dans la surface de coupe du perçage, entre des couches adjacentes.

8. Procédé pour le raccordement d'une conduite dérivée à une conduite éventuellement sous pression, au moyen d'un dispositif de perçage, dans lequel le dispositif de perçage est tout d'abord placé avec une pièce d'accouplement sur le côté extérieur de la conduite, puis la pièce d'accouplement est reliée à la surface extérieure de la conduite et la paroi de la conduite est percée au moyen d'un foret,
**caractérisé en ce qu'**une conduite à plusieurs couches (12) est percée, dans laquelle au moins deux couches de la conduite, reliée entre elles par adhérence lors de la fabrication de la conduite, sont pourvues d'un perçage de diamètre régulier, et, après le perçage, au moins une fente provoquée par le perçage, entre deux couches adjacentes (20, 21) de la conduite à plusieurs couches, dans la région de la surface frontale du perçage dans la paroi de conduite, est colmatée en étant chauffée par les moyens (22) prévus dans le dispositif de perçage.

9. Procédé selon la revendication 8, **caractérisé par** l'utilisation d'un dispositif de perçage avec les caractéristiques de l'une des revendications 1 à 7.
